# NOUVEAU FASCICULE DE BREVET EUROPEEN

(11) **EP 0 487 371 B2**
(45) Date de publication et mention de la décision concernant l'opposition: **16.12.1998**
(45) Mention de la délivrance du brevet: 14.06.1995
(21) Numéro de dépôt: 91402904.6
(22) Date de dépôt: 29.10.1991
(51) Int. Cl.: G21C 19/307, G21C 3/32

(54) **Embout inférieur filtrant pour un assemblage combustible d'un réacteur nucléaire refroidi par de l'eau légère**
Filterfussstück für Brennstabbundel eines leichtwassergekühlten Kernreaktors
Filter bottom nozzle for light water cooled nuclear reactor fuel assembly

(30) Priorité: 20.11.1990 FR 9014454
(43) Date de publication de la demande: 27.05.1992
(73) Titulaire: FRAMATOME, 92400 Courbevoie (FR); COGEMA, F-78141 Velizy Villacoublay (FR)
(72) Inventeur: Verdier, Michel, F-69100 Villeurbanne (FR)
(74) Mandataire: Beetz & Partner Patentanwälte

(56) Documents cités:
- EP-A- 319 725
- EP-A- 455 010
- EP-A- 0 311 037
- EP-A- 0 392 919
- US-A- 4 684 495
- US-A- 4 832 905

## Description

L'invention concerne un embout inférieur filtrant pour un assemblage combustible d'un réacteur nucléaire refroidi par de l'eau légère et en particulier pour un assemblage combustible d'un réacteur nucléaire à eau sous pression.

Les réacteurs nucléaires à eau sous pression comportent un coeur constitué par des assemblages prismatiques disposés côte à côte en position verticale. Les assemblages comportent une ossature, constituée par des tubes-guides longitudinaux et des grilles-entretoises et fermée par des embouts, dans laquelle sont disposés les crayons combustibles.

L'un des embouts de l'assemblage, appelé embout inférieur, vient reposer sur la plaque inférieure de coeur qui est percée de trous au niveau de chacun des assemblages pour permettre le passage de l'eau de refroidissement du réacteur à travers le coeur dans la direction verticale et de bas en haut.

Cet embout comporte des pieds supports qui viennent reposer sur la plaque inférieure du coeur et un élément transversal par rapport à la direction des crayons combustibles du faisceau solidaire des pieds supports. Cet élément transversal est constitué par une plaque adaptatrice, dans laquelle sont fixées les extrémités inférieures des tubes-guides de l'assemblage et qui est traversée par des ouvertures permettant le passage et assurant la répartition de l'eau de refroidissement du réacteur, qui circule suivant la direction verticale et en contact avec la surface extérieure des crayons de l'assemblage, après traversée de l'embout inférieur.

La plaque adaptatrice de l'embout inférieur d'un assemblage combustible d'un réacteur refroidi à l'eau contribue ainsi à la rigidité de l'ossature de l'assemblage et assure la reprise des efforts exercés sur l'embout inférieur et en particulier la reprise du poids de l'ossature et du faisceau qui est transmis par les tubes-guides, à la plaque adaptatrice, aux pieds-supports et à la plaque inférieure de coeur ; la plaque adpatatrice doit en plus permettre le passage et la répartition de l'eau de refroidissement de l'assemblage.

La plaque adaptatrice est principalement sollicitée en flexion et subit des contraintes importantes, en particulier au voisinage de sa face supérieure et de sa face inférieure. Cette plaque, réalisée sous forme monobloc, doit présenter une épaisseur importante assurant une grande rigidité à l'embout inférieur.

La plaque adaptatrice doit également assurer la retenue des crayons combustibles de l'assemblage, dans le cas où certains de ces crayons ne sont plus maintenus de façon suffisamment efficace par les éléments de maintien des grilles-entretoises et ont tendance à glisser dans la direction axiale du faisceau, sous l'effet de leur poids.

Dans la mesure où les trous de passage d'eau traversant la plaque adaptatrice sont généralement d'un diamètre supérieur au diamètre des crayons combustibles, il est nécessaire de prévoir un réseau de trous dans des positions décalées par rapport aux positions transversales des crayons combustibles, de manière que chacun des crayons combustibles se trouve à l'aplomb d'une partie pleine de la plaque adaptatrice.

Même dans le cas où tout ou partie des trous traversant la plaque adaptatrice présentent un diamètre inférieur et même nettement inférieur à celui des crayons combustibles, il est souhaitable d'éviter de placer ces trous de petit diamètre à l'aplomb des crayons combustibles qui risquent, en cas de chute accidentelle, de boucher un ou plusieurs passages d'eau et donc de diminuer ou de supprimer localement le refroidissement des crayons combustibles par circulation d'eau.

En outre, il est nécessaire de prévoir, compte tenu de l'épaisseur de la plaque adaptatrice, des trous de passage d'eau tels que la perte de charge de l'eau de refroidissement à travers l'embout inférieur soit la plus faible possible.

Il est extrêmement difficile de concevoir une plaque adaptatrice qui puisse répondre aux différents impératifs d'ordre mécanique et hydraulique évoqués ci-dessus.

L'usinage de cette plaque adaptatrice est une opération extrêmement délicate qui requiert une grande précision d'exécution.

Des débris de matériaux peuvent être présents dans le circuit primaire du réacteur et sont susceptibles d'être entraînés par l'eau sous pression en circulation. Dans le cas où leur taille est faible (par exemple inférieure à 10 mm), ces débris peuvent passer au travers de la plaque adaptatrice de l'embout inférieur dont les trous de passage d'eau ont un diamètre généralement supérieur à 10 mm. Ces débris peuvent venir se coincer entre les crayons combustibles et les éléments de maintien des crayons au niveau de la première grille, c'est-à-dire de la grille-entretoise maintenant les crayons suivant un réseau régulier disposée le plus bas dans l'assemblage. Ces débris soumis aux sollicitations hydrauliques axiales et transversales qui sont importantes dans cette zone peuvent user le gainage du crayon combustible. Il risque d'en résulter une perte d'étanchéité de ce gainage ainsi qu'une augmentation du taux d'activité du circuit primaire du réacteur.

Pour éviter l'entraînement de ces débris à l'intérieur de l'assemblage, on a proposé de réaliser la filtration du fluide de refroidissement, au niveau de la plaque adaptatrice de l'embout inférieur, en prévoyant des trous traversant cette plaque adaptatrice dont le diamètre est suffisamment faible pour arrêter les débris susceptibles de se coincer dans la première grille de l'assemblage.

Cependant, pour assurer le passage du débit de fluide de refroidissement à travers la plaque adaptatrice. avec une perte de charge modérée, il est nécessaire de prévoir un réseau de trous de traversée très dense, ce qui complique encore l'usinage de la plaque adaptatrice.

Il est également possible, comme il est décrit dans la demande de brevet européen EP-A-0.311.037, de prévoir des ouvertures de grandes dimensions traversant la plaque adaptatrice et de disposer à l'intérieur de ces ouvertures des grilles de filtration permettant d'arrêter les débris entraînés car l'eau de refroidissement du réacteur.

Les embouts inférieurs des assemblages combustibles peuvent être réalisés sous forme monobloc, par usinage d'une pièce moulée ou, au contraire, à partir de plusieurs pièces moulées ou usinées qui sont assemblées entre elles par soudage. Dans ce cas, il peut être particulièrement avantageux de réaliser le soudage par faisceau d'électrons ou par laser.

Les embouts de l'assemblage peuvent être constitués par exemple par une structure réticulée limitée extérieurement par un cadre dont la section correspond sensiblement à la section transversale de l'assemblage et présentant des parois reliées entre elles et au cadre, délimitant des cellules de grande dimension n'introduisant qu'une perte de charge négligeable sur la circulation de l'eau de refroidissement du réacteur. Une plaque de faible épaisseur qui peut être découpée à la presse est rapportée et fixée sur l'une des faces de la structure réticulée de manière amovible. De manière à régler l'écoulement de l'eau de refroidissement à travers l'embout, la plaque est percée d'ouvertures dont la forme, les dimensions et la disposition permettent de fixer la perte de charge et la répartition de l'eau traversant l'embout.

Dans la demande de brevet européen EP-A 0435744, publiée le 03.07.91 qui correspond à FR-A-2656456 publiée le 28.06.91 est décrit un embout inférieur d'un assemblage combustible comportant un élément transversal de reprise d'efforts et de retenue des crayons combustibles constitué par une structure réticulée résistant à la flexion et une plaque de retenue de faible épaisseur par rapport à l'épaisseur de la structure réticulée, percée d'un réseau régulier d'ouvertures d'une taille suffisamment faible pour arrêter les débris susceptibles d'être entraînés par l'eau de refroidissement du réacteur et pouvant venir se loger à l'intérieur de l'assemblage. L'élément transversal de l'embout en forme de caisson permet de ménager, entre la structure réticulée et la plaque de retenue des débris, un espace libre de tranquillisation de l'écoulement de l'eau de refroidissement du réacteur et de récupération des débris.

Un tel embout à l'inconvénient d'être réalisé sous forme sandwich et de présenter en conséquence une épaisseur relativement importante dans la direction axiale de l'embout. Un tel embout est susceptible de imiter les possibilités de grandissement des crayons, ce qui peut entrainer certaines limitations de l'utilisation des assemblages combustibles, dans le cas de taux de combustion élevés.

Le but de l'invention est donc de proposer un embout inférieur filtrant pour un assemblage combustible d'un réacteur nucléaire refroidi par de l'eau légère comportant un élément transversal de reprise d'efforts et de retenue des crayons constitué par une structure réticulée résistant à la flexion, limitée extérieurement par un cadre dont la section est sensiblement identique à la section transversale de l'assemblage et présentant des parois délimitant des cellules qui constituent des ouvertures de passage d'eau de refroidissement de l'assemblage, cet embout présentant des caractéristiques hydrauliques satisfaisantes et un encombrement réduit dans la direction longitudinale de l'assemblage et permettant d'assurer une filtration efficace des débris entraînés par l'eau de refroidissement du réacteur.

Dans ce but, l'embout inférieur suivant l'invention comporte, à l'intérieur de chacune des cellules de la structure réticulée, une pluralité de lamelles paralèlles entre elles, soit fixées par leurs extrémités directement et individuellement sur deux parois opposées de la cellule, soit disposées, par leurs extrémités, à l'intérieur d'une cellule de la structure réticulée et reliées à un cadre dont la forme correspond à la forme de la cellule et constituant un élément modulaire de filtration qui peut être soudé ou brasé sur la structure réticulée de manière que leurs faces soient sensiblement parallèles à la direction de circulation de l'eau de refroidissement et de façon à aménager entre elles des espaces de largeur inférieure à la taille des particules susceptibles d'être entraînées par le fluide de refroidissement et de se loger à l'intérieur de l'assemblage.

Afin de bien faire comprendre l'invention, on va maintenant décrire, à titre d'exemples non limitatifs, en se référant aux figures jointes en annexe, un assemblage combustible comportant un embout inférieur suivant l'invention et plusieurs modes de réalisation de l'embout inférieur suivant l'invention.

La figure 1 est une vue en élévation d'un assemblage combustible d'un réacteur nucléaire à eau sous pression reposant sur la plaque inférieure de coeur du réacteur.

La figure 2 est une vue en coupe par un plan vertical d'un embout inférieur filtrant suivant l'invention.

La figure 3 est une vue de dessus partielle, suivant 3 de l'embout représenté sur la figure 2.

La figure 4 est une vue partielle en perspective avec arrachement d'un embout filtrant suivant l'invention et suivant un premier mode de réalisation.

Les figures 4A et 4B sont des vues de détail en perspective montrant deux modes de fixation différents des lamelles d'un emoout filtrant tel que représenté sur la figure 4.

La figure 5 est une vue partielle en perspective éclatée d'un embout filtrant suivant l'invention et suivant un second mode de réalisation.

Les figures 5A et 5B sont des vues en perspective de deux éléments modulaires de filtration d'un embout suivant l'invention et suivant deux variantes de réalisation.

Les figures 6A, 6B et 6C sont des vues en perspective de lamelles d'un embout suivant l'invention, suivant trois variantes de réalisation.

La figure 7 est une vue en perspective d'un élément modulaire de filtration d'un embout suivant l'invention, dans le cas d'une variante de réalisation permettant la dilatation de l'élément de filtration.

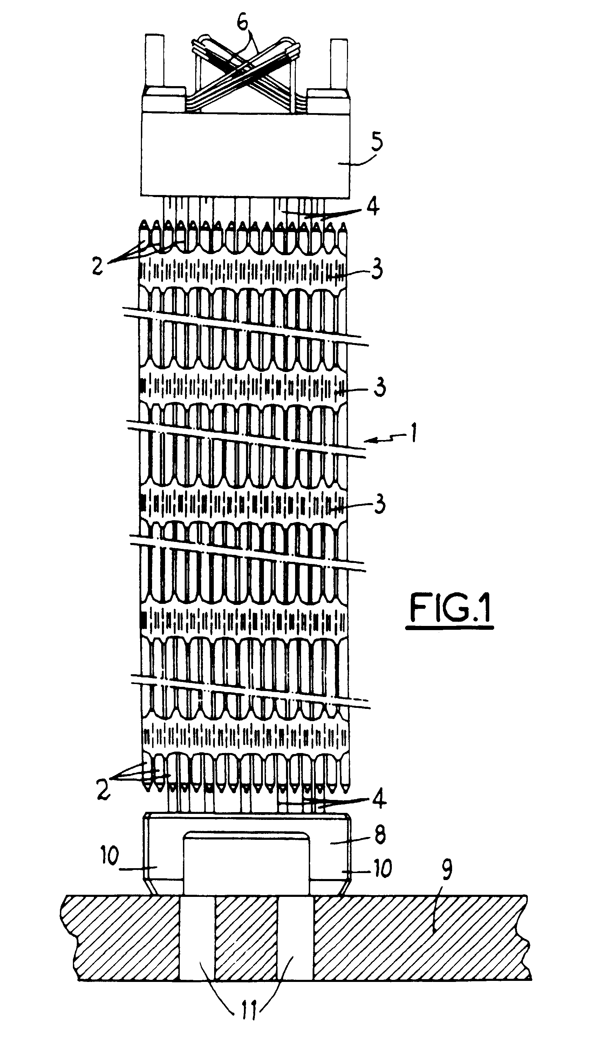

Sur la figure 1, on voit un assemblage combustible d'un réacteur nucléaire à eau sous pression désigné de manière générale par le repère 1. Cet assemblage combustible comporte un faisceau de crayons combustibles 2 maintenus dans une disposition parallèle par des grilles entretoises 3 régulièrement espacées suivant la longueur du faisceau.

Les grilles 3 assurent le maintien des crayons 2 suivant un réseau régulier dans les plans transversaux du faisceau perpendiculaires à la direction longitudinale de l'assemblage.

Certaines positions de crayons combustibles dans le réseau défini par les grilles 3 sont occupés par des tubes guides 4 ayant une longueur supérieure à la longueur des crayons combustibles.

Les tubes guides 4 comportent, à chacune de leurs extrémités, une partie en saillie par rapport aux extrémités des crayons 2 du faisceau.

Un embout supérieur 5 est fixé sur les parties d'extrémités des tubes guides 4 situées au-dessus du faisceau. L'embout supérieur 5 de l'assemblage comporte des ressorts 6 permettant d'assurer le maintien de l'assemblage combustible 1 sous la plaque supérieure de coeur du réacteur qui est mise en appui sur les ressorts 6 des assemblages après le chargement du coeur. Les ressorts 6 sont de plus susceptibles de se déformer pour permettre une dilatation longitudinale de l'assemblage à l'intérieur du coeur du réacteur.

Les extrémités des tubes guides 4 qui sont saillantes en-dessous du faisceau de crayons sont reliées à un embout inférieur 8 qui repose par l'intermédiaire de pieds-supports 10 sur la plaque inférieure de coeur 9 du réacteur, lorsque l'assemblage 1 est en place dans le coeur du réacteur.

La plaque inférieure de coeur 9 est traversée par des ouvertures 11 de passage d'eau à l'aplomb de l'embout inférieur de chacun des assemblages combustibles 1. L'embout inférieur 8 comporte un élément de reprise d'efforts et de retenue des crayons 2 ayant une disposition transversale par rapport à l'assemblage sur lequel sont fixées les extrémités des tubes guides 4.

Les efforts exercés par l'assemblage combustible et en particulier le poids de l'assemblage sont transmis à la plaque inférieure de coeur 9, par l'intermédiaire des tubes guides 4 et de l'élément transversal et des pieds-supports de l'embout inférieur 8.

L'eau de refroidissement de l'assemblage traverse la plaque inférieure de coeur 9 par l'intermédiaire des ouvertures 11, puis l'élément transversal de l'embout 8, avant de circuler entre les crayons 2 du faisceau de l'assemblage.

Dans le cas de la réalisation de l'élément transversal de l'embout inférieur d'un assemblage combustible sous la forme d'une structure réticulée à laquelle est associée une plaque de filtration superposée à la structure réticulée, la plaque de filtration introduit une perte de charge importante sur la circulation du fluide de refroidissement, si bien que les efforts de direction verticale d'origine hydraulique exercés sur l'assemblage par le fluide de refroidissement sont susceptibles de devenir trop importants pour que les ressorts de maintien de l'assemblage puissent empêcher tout soulèvement de l'assemblage au-dessus de la plaque inférieure de coeur. En effet, l'efficacité de la filtration nécessite de limiter le diamètre des trous traversant la plaque de filtration à une valeur faible, par exemple de l'ordre de 3 mm.

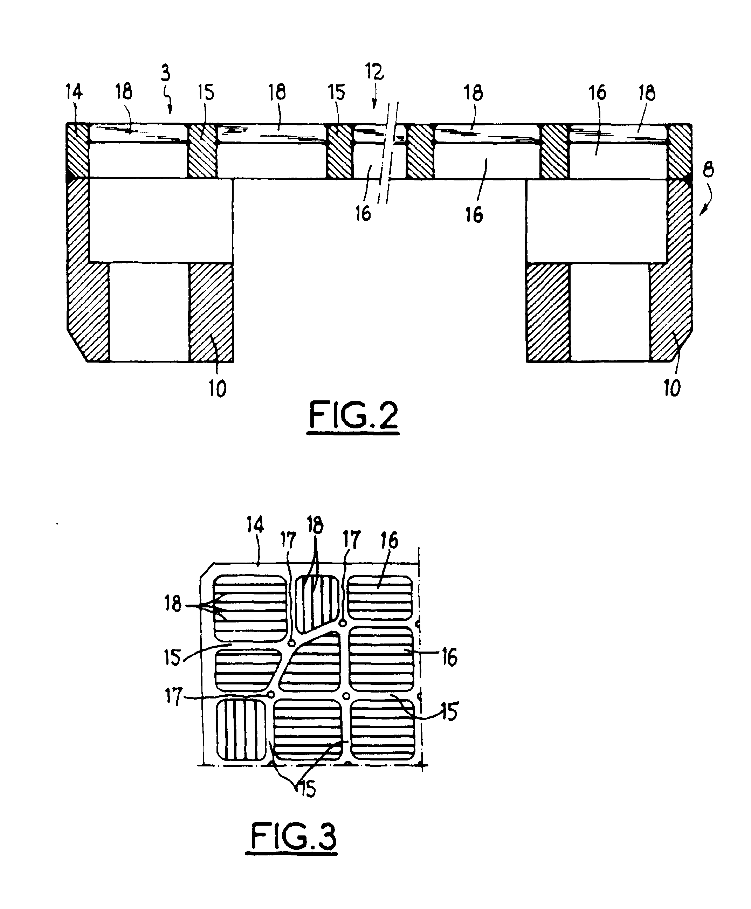

Sur la figure 2, on a représenté un embout inférieur 8 d'assemblage combustible, suivant l'invention, qui permet d'éviter les inconvénients des embouts inférieurs suivant l'art antérieur comportant un élément transversal constitué par une structure réticulée et une plaque de filtration superposée à la structure.

L'embout 8 suivant l'invention comporte un élément transversal de reprise des efforts et de retenue des crayons combustibles désigné de manière générale par le repère 12 et des pieds-supports 10 fixés par soudure sur la face inférieure de l'élément transversal 12.

Comme il est visible sur les figures 2 et 3, l'élément transversal 12 de l'embout 8 est constitué par une structure 14 comportant des parois 15 délimitant des cellules 16 dont les sections ont la forme de quadrilatères à angles arrondis.

La structure réticulée 14 est limitée extérieurement par un cadre de forme carrée dont les dimensions correspondent sensiblement aux dimensions de la section transversale de l'assemblage combustible 1.

Les parois 15 des cellules 16 de la structure 14 sont reliées entre elles, au niveau des angles des cellules 16, pour constituer des noeuds de jonction qui sont traversés par des ouvertures 17 permettant la fixation des tubes guides de l'assemblage sur l'élément transversal 12 de l'embout inférieur 8.

Les parois 15 présentent une épaisseur relativement faible par rapport aux dimensions des cellules 16, de sorte que la surface de l'ensemble des cellules 16 est importante par rapport à la surface totale de l'embout.

La structure 14 fortement ajourée introduit donc une perte de charge relativement faible sur la circulation de l'eau de refroidissement à travers l'embout 8.

La structure réticulée 14 présente une grande rigidité à la flexion, malgré l'épaisseur relativement faible des parois 15 délimitant les cellules 16.

Grâce à sa rigidité à la flexion, la structure 14 permet de transmettre de manière satisfaisante aux pieds-supports 10 et à la plaque inférieure de coeur, les efforts mécaniques et le poids de l'assemblage combustible, transmis par les tubes guides de l'assemblage.

L'élément transversal 12 de l'embout 8 doit également assurer une distribution homogène du réfrigérant à l'intérieur de l'assemblage, avec une perte de charge la plus faible possible, l'arrêt des débris susceptibles d'endommager les crayons combustibles et la limitation du débattement axial des crayons combustibles qui se déplacent par glissement à l'intérieur des grilles-entretoises, sous l'effet du grandissement.

Afin de permettre à l'élément tranversal 12 d'assurer ces fonctions, selon l'invention, des lamelles métalliques 18 sont fixées à l'intérieur de chacune des cellules 16, dans la partie supérieure des cellules, le bord supérieur des lamelles 18 se trouvant placé suivant la surface supérieure plane de l'élément transversal 12.

Les lamelles 18 sont disposées parallèlement les unes aux autres à l'intérieur de chacune des cellules 16 dans une direction correspondant à la direction de deux parois parallèles opposées de la cellule 16.

Si l'on considère l'ensemble des cellules 16 de l'élément transversal 12, les lames 18 peuvent être placées dans l'une ou l'autre de deux directions parallèles à deux faces opposées du cadre de forme carrée de la structure 14. Les lamelles métalliques 18 sont fixées sur les parois 15 des cellules, à leurs extrémités, de manière que les faces des lamelles 18 soient parallèles ou sensiblement parallèles à la direction de circulation du fluide à travers l'embout inférieur 8, c'est-à-dire la direction longitudinale de l'assemblage.

Les lamelles métalliques 18 délimitent entre elles des espaces de forme rectangulaire, dont la largeur est inférieure à la taille des débris susceptibles de venir se coincer à l'intérieur de l'assemblage combustible, entre les crayons et les parois des grilles.

Dans le cas d'assemblages combustibles de type classique, pour des réacteurs nucléaires à eau sous pression, on peut utiliser des lamelles métalliques 18 d'une épaisseur de 0,5 mm délimitant entre elles des espaces rectangulaires d'une largeur de 3 mm.

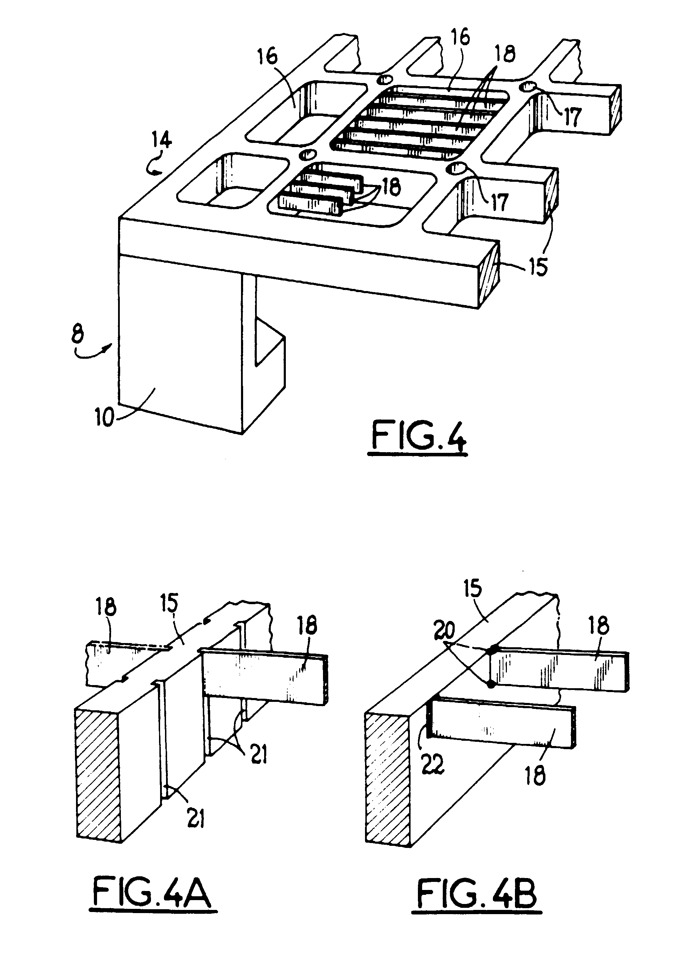

Sur la figure 4, on a représenté une structure réticulée 14 comportant des cellules 16 dans lesquelles des lamelles métalliques 18 sont fixées directement sur les parois 15, par l'intermédiaire de leurs extrémités et indépendamment les unes des autres.

Sur la figure 4A, on a représenté un premier mode de fixation des parties d'extrémité des lamelles 18 sur les parois 15, les parois 15 comportant des fentes 21 de direction longitudinale régulièrement espacées suivant la longueur des parois 15, dont la largeur est sensiblement égale ou très légèrement supérieure à l'épaisseur des lamelles 18.

Les extrémités de chacune des lamelles 18 sont introduites dans deux fentes 21 disposées en vis-à-vis sur deux parois 15 opposées d'une cellule 16 de la structure 14. Les extrémités des lamelles métalliques 18 introduites dans les fentes 21 sont fixées sur les parois 15, par brasage à l'intérieur des fentes 21.

Sur la figure 4B, on a représenté les parties d'extrémité de deux lamelles métalliques 18 qui sont fixées par soudage sur une paroi 15 délimitant une cellule 16 de la structure 14. L'une des lamelles 18 est fixée par des points de soudure 20 sur une surface de la paroi 15 et l'autre lamelle 18 est fixée par un cordon de soudure 22 sur la paroi 15.

Dans le cas d'une fixation par soudure tel que représenté sur la figure 4B, il n'est pas nécessaire d'usiner les parois 15 pour réaliser des fentes parallèles 21, les extrémités des lamelles 18 étant rapportées directement sur la paroi 15 de la cellule 16.

Les lamelles 18 sont fixées l'une à la suite de l'autre, dans des dispositions parallèles, à l'intérieur de chacune des cellules 16 de la structure 14.

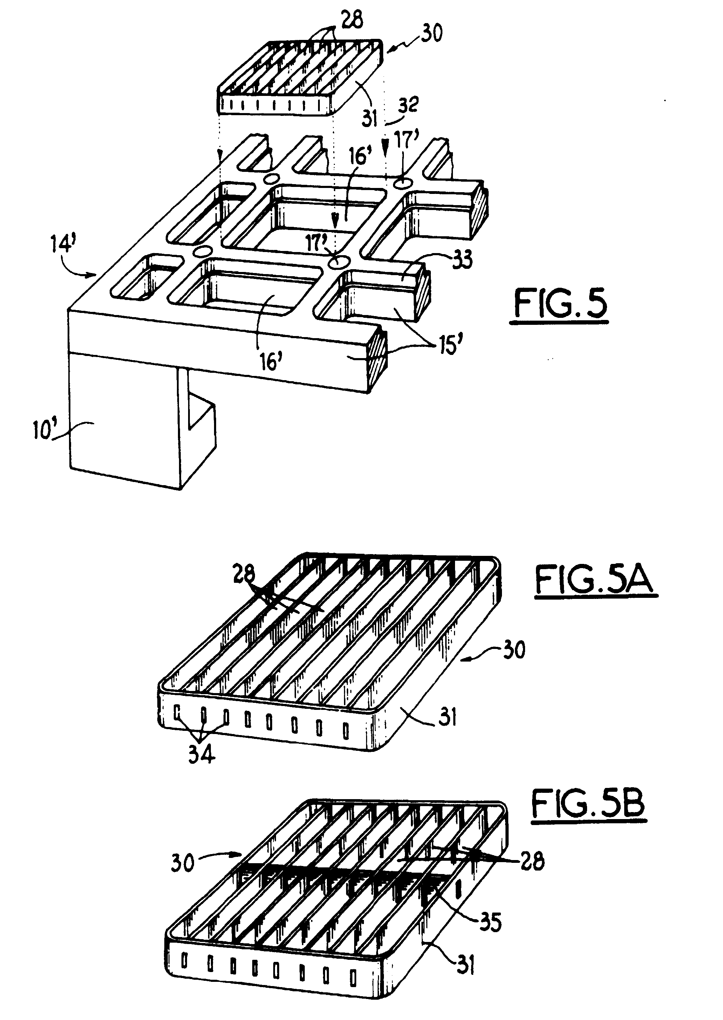

Dans le cas du mode de réalisation d'un embout inférieur d'un assemblage combustible tel que représenté sur les figures 5, 5A et 5B comportant une structure réticulée 14' et des ensembles de lamelles métalliques 28 disposés dans les cellules 16' de la structure réticulée 14', chacun des ensembles de lamelles 28 disposés dans une cellule 16' de la structure 14' constitue un élément modulaire 30, les lamelles 28 étant fixées à leurs extrémités sur deux parois opposées d'un cadre 31 dont la forme correspond à la forme de la cellule 16 dans laquelle est disposé l'élément 30, par simple engagement, comme représenté par les flèches 32 sur la figure 5.

Les parois 15' de la structure 14' sont usinées dans leur partie supérieure pour constituer, à l'intérieur de chacune des cellules 16', un logement 33 permettant l'encastrement du cadre 31 d'un élément modulaire 30 comportant un ensemble de lamelles 28.

Après engagement et encastrement dans un logement 33 d'une cellule 16', le cadre 31 de l'élément modulaire 30 est soudé ou brasé sur les parois correspondantes 15' de la structure réticulée 14'.

Les lamelles 28 peuvent être découpées dans un feuillard et fixées à leurs extrémités sur deux faces opposées d'un cadre 31, par brasage ou par soudage.

Le cadre 31 de l'élément modulaire 30 sur lequel sont fixées les lamelles 28 peut être réalisé par pliage et par soudage d'un feuillard qui peut être identique au feuillard dans lequel on a réalisé le découpage des lamelles 28.

Les extrémités des lamelles 28 peuvent être engagées dans des fentes 34 traversant deux parois opposées du cadre 31, dans des positions situées en vis-à-vis, afin de pouvoir réaliser l'assemblage des lamelles 28 et du cadre 31, par soudage ou par brasage, par l'extérieur du cadre 31.

Les lamelles 28 sont placées dans des dispositions parallèles et de manière à délimiter entre elles des espaces de forme rectangulaire dont la largeur est inférieure à la taille des particules dont on veut assurer la retenue, au niveau de l'embout inférieur de l'assemblage combustible.

Sur la figure 5B, on a représenté une variante de réalisation d'un élément modulaire 30 comportant un cadre 31 et un ensemble de lamelles parallèles 28 fixées à leurs extrémités sur deux faces opposées du cadre 31.

Un élément de renfort 35 fixé à ses extrémités sur deux faces opposées du cadre 31 et comportant des fentes dans chacune desquelles est engagée une lamelle 28 permet d'assurer un maintien des lamelles 28, de manière à préserver leur espacement et à réduire leur déplacement transversal sous l'effet de l'écoulement de l'eau de refroidissement ou par appui des crayons combustibles de l'assemblage sur l'embout inférieur.

Les éléments modulaires 30 destinés à être introduits dans les cellules 16' de la structure 14' peuvent être réalisés sous forme monobloc, par usinage d'une tôle épaisse par un procédé tel que l'électroérosion, l'électro-chimie ou le découpage par un jet d'eau abrasif, en remplacement d'un procédé par assemblage de plaquettes métalliques découpées dans un feuillard.

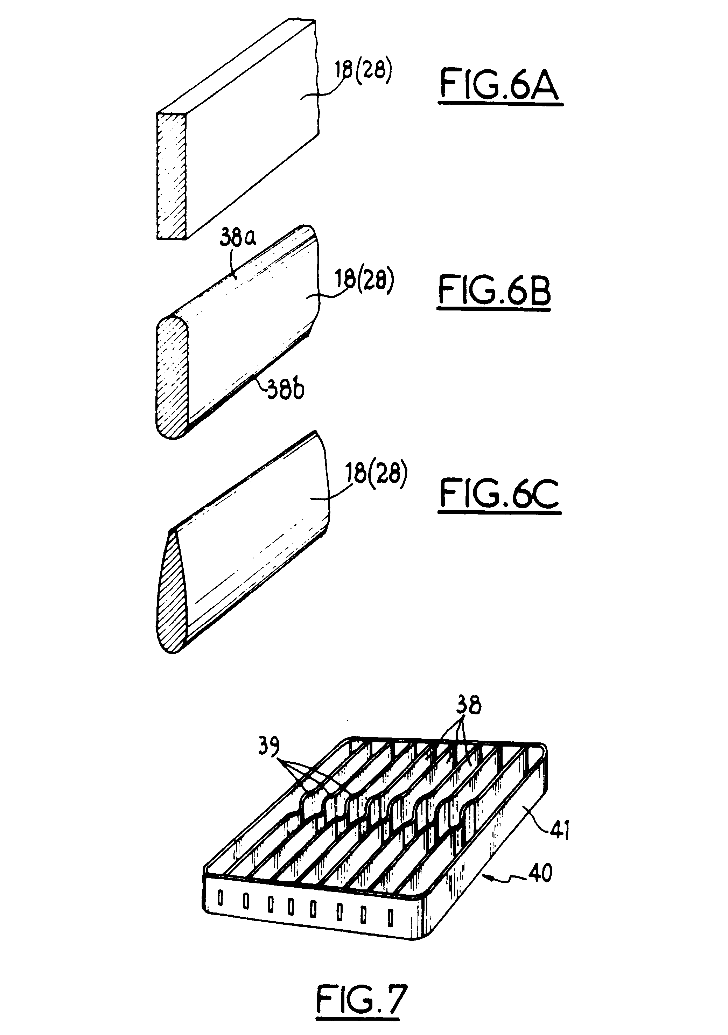

Comme il est visible sur les figures 6A, 6B et 6C, les lamelles métalliques telles que les lamelles 18 fixées directement et individuellement sur les parois 15 de la structure 14 d'un embout d'un assemblage combustible ou telles que les lamelles 28 d'un élément modulaire 30 peuvent avoir des sections de formes différentes.

Sur la figure 6A, on a représenté une lamelle 18 qui présente une section de forme rectangulaire et qui peut être obtenue par découpage d'une tôle métallique ou d'un feuillard.

Sur la figure 6B, on a représenté une lamelle 18 présentant deux bords arrondis 38a et 38b constituant les extrémités longitudinales de sa section transversale.

La présence de bords arrondis tels que 38a et 38b constituant les bords d'attaque et de fuite de la lamelle 18 par rapport à l'écoulement d'eau de refroidissement permet de diminuer la résistance hydraulique de la lamelle 18 interposée sur l'écoulement de l'eau de refroidissement.

Une lamelle telle que la lamelle 18 représentée sur la figure 6B peut être obtenue par découpage d'un feuillard en bande à bords arrondis ou par usinage d'une lamelle à section rectangulaire telle que représentée sur la figure 6A.

On peut encore réduire de manière plus importante la résistance hydraulique des lamelles 18 en utilisant des lamelles ayant une section telle que représentée sur la figure 6C. De telles lamelles peuvent être obtenues à partir de bandes de feuillard laminées spécialement ou par usinage.

On peut par exemple réaliser un ensemble monobloc modulaire tel que les ensembles 30 représentés sur les figures 5A et 5B comportant des lamelles profilées telles que représentées sur la figure 6C, par un procédé d'usinage tel qu'indiqué plus haut.

Les lamelles fixées dans les cellules de la structure réticulée peuvent être réalisées en tout matériau possédant de bonnes caractéristiques mécaniques dans les conditions d'utilisation de l'assemblage combustible et résistant à l'usure due à la présence de débris dans l'eau de refroidissement du réacteur.

On utilisera par exemple un alliage de nickel tel que l'Inconel 718 ou de l'acier martensitique.

Il est avantageux de choisir, pour réaliser les lamelles et la structure réticulée de l'embout inférieur de l'assemblage, des matériaux qui ont des coefficients de dilatation thermique aussi voisins que possible. Dans le cas où l'on utilise des matériaux ayant des coefficients de dilatation thermique sensiblement différents, il peut être nécessaire de prévoir des formes des lamelles permettant une certaine dilatation différentielle des lamelles et de la structure réticulée.

Sur la figure 7, on a représenté un élément modulaire 40 comportant un cadre 41 et des lamelles 38 fixées sur deux côtés opposés du cadre 41.

De manière à permettre une dilatation différentielle des lamelles et de la structure réticulée destinée à recevoir l'élément modulaire 40, chacune des lamelles 38 comporte dans sa partie médiane, une zone 39 où la lamelle 38 comporte des ondulations successives permettant sa dilatation longitudinale.

L'embout inférieur suivant l'invention comportant une structure réticulée et des lamelles disposées à l'intérieur des cellules de la structure réticulée présente des avantages important qui seront indiqués ci-dessous.

L'élément transversal de l'embout comportant la structure réticulée présente une bonne rigidité à la flexion et transmet de manière satisfaisante, les efforts provenant de l'assemblage combustible à la plaque inférieure de coeur.

L'élément transversal de l'embout assure une distribution homogène du réfrigérant dans le faisceau de crayons combustibles avec une faible perte de charge.

Les lamelles disposées dans les cellules de la structure réticulaire permettent d'arrêter les débris susceptibles d'endommager les crayons combustibles.

L'embout suivant l'invention permet d'assurer une retenue axiale efficace des crayons combustibles, tout en autorisant un grandissement des crayons sous irradiation relativement élevé, du fait de la dimension, épaisseur, relativement réduite de l'élément transversal de l'embout dans la direction longitudinale de l'assemblage.

En effet, le fait de disposer les lamelles assurant la retenue des crayons et la filtration de l'eau de refroidissement à l'intérieur de la structure réticulée permet de diminuer la hauteur de l'embout, si bien que l'espace disponible pour le grandissement des crayons est accru.

Les possibilités accrues de grandissement des crayons permettent d'utiliser ceux-ci avec des taux de combustion élevés.

L'invention ne se limite pas aux modes de réalisation qui ont été décrits.

C'est ainsi que les lamelles assurant la retenue des crayons et la filtration de l'eau de refroidissement de l'assemblage peuvent avoir des formes différentes de celles qui ont été décrites et peuvent être fixées sur la structure réticulée de l'embout d'une manière différente, soit directement et individuellement, soit par ensembles ou modules fixés chacun à l'intérieur d'une cellule de la structure réticulée.

L'embout suivant l'invention peut être utilisé non seulement comme embout inférieur sur tout assemblage combustible d'un réacteur nucléaire refroidi par de l'eau sous pression mais encore comme embout inférieur d'un assemblage combustible d'un réacteur nucléaire de type quelconque refroidi par de l'eau légère.

## Revendications

1. Embout inférieur filtrant pour un assemblage combustible d'un réacteur nucléaire refroidi par de l'eau légère comportant un élément transversal (12) de reprise d'effort et de retenue des crayons de l'assemblage constitué par une structure réticulée (14, 14') résistant à la flexion, limitée extérieurement par un cadre dont la section est sensiblement identique à la section transversale de l'assemblage (1) et présentant des parois (15) reliées entre elles et délimitant des cellules (16) qui constituent des ouvertures de passage d'eau de refroidissement de l'assemblage et qui présentent une épaisseur relativement faible par rapport aux dimensions des cellules (16), de sorte que la surface de l'ensemble des cellules (16) est importante par rapport à la surface totale de l'embout, à l'intérieur de chacune des cellules (16, 16') de la structure réticulée (14, 14') une pluralité de lamelles (18, 28) parallèles entre elles, étant fixées par leurs extrémités directement et individuellement sur deux parois opposées de la cellule de manière que leurs faces soient sensiblement parallèles à la direction de circulation de l'eau de refroidissement et de façon à ménager entre elles des espaces de largeur inférieure à la taille des particules susceptibles d'être entraînées par le fluide de refroidissement et de se loger à l'intérieur de l'assemblage combustible (1).

2. Embout suivant la revendication 1, caractérisé par le fait que les extrémités des lamelles (18) sont engagées dans des fentes (21) usinées dans la direction longitudinale sur les parois (15) des cellules (16) de la structure réticulée (14) et brasées à l'intérieur des fentes (21).

3. Embout suivant la revendication 1, caractérisé par le fait que les extrémités des lamelles (18) sont soudée sur les parois (15) des cellules (16) de la structure réticulée (14).

4. Embout suivant la revendication 3, caractérisé par le fait que les lamelles (18) sont soudées par points sur les parois (15) des cellules (16) de la structure réticulée (14).

5. Embout suivant la revendication 3, caractérisé par le fait que les extrémités des lamelles (18) sont soudées par l'intermédiaire de cordons de soudure (22) sur les parois (15) des cellules (16) de la structure réticulée (14).

6. Embout inférieur filtrant pour un assemblage combustible d'un réacteur nucléaire refroidi par de l'eau légère comportant un élément transversal (12) de reprise d'effort et de retenue des crayons de l'assemblage constitué par une structure réticulée (14, 14') résistant à la flexion, limitée extérieurement par un cadre dont la section est sensiblement identique à la section transversale de l'assemblage (1) et présentant des parois (15) délimitant des cellules (16) qui constituent des ouvertures de passage d'eau de refroidissement de l'assemblage, à l'intérieur de chacune des cellules (16, 16') de la structure réticulée (14, 14') une pluralité de lamelles (18, 28) parallèles entre elles, étant fixées sur les parois de la cellule par leurs extrémités de manière que leurs faces soient sensiblement parallèles à la direction de circulation de l'eau de refroidissement et de façon à ménager entre elles des espaces de largeur inférieure à la taille des particules susceptibles d'être entraînées par le fluide de refroidissement et de se loger à l'intérieur de l'assemblage combustible (1) lesdites lamelles parallèles (28) de chacun des ensembles étant disposées à l'intérieur d'une cellule (16') de la structure réticulée (14') et reliées à un cadre (31) dont la forme corresoond à la forme de la cellule (16') par leurs extrémités et constituant un élément modulaire de filtration (30) qui peut être soudé ou brasé sur la structure réticulée (14).

7. Embout suivant la revendication 6, caractérisé par le fait que les ensembles modulaires (30) sont constitués par des éléments métalliques découpés dans une tôle ou un feuillard assemblés entre eux par soudage ou par brasage.

8. Embout suivant la revendication 6, caractérisé par le fait que les ensembles modulaires (30) sont constitués sous forme monobloc et réalisés par usinage d'une pièce découpée dans une tôle épaisse, par l'un des procédés suivants : électroérosion, usinage électrochimique, découpage par jets d'eau abrasifs.

9. Embout suivant l'une quelconque des revendications 6, 7 et 8, caractérisé par le fait que les éléments modulaires (30) comportent un élément de renfort (35) fixé sur le cadre extérieur (31) de l'élément modulaire (30) suivant deux côtés du cadre (30) parallèles aux lamelles (28) et assurant le maintien transversal des lamelles (28).

10. Embout suivent l'une quelconque des revendications 1 à 9, caractérisé par le fait que les lamelles (18, 28) présentent une section rectangulaire.

11. Embout suivant l'une quelconque des revendications 1 à 9, caractérisé par le fait que les lamelles (18, 28) présentent une section allongée à bords arrondis.

12. Embout suivant l'une quelconque des revendications 1 à 9, caractérisé par le fait que les lamelles (18, 28) présentent une section profilée, de manière à réduire la résistance hydraulique des lamelles (18, 28) au passage de l'eau de refroidissement dans l'assemblage combustible.

13. Embout suivant l'une quelconque des revendications 1 à 12, caractérisé par le fait que les lamelles (18, 28) sont constituées en un matériau ayant un coefficient de dilatation voisin du matériau constituant la structure réticulée (14) de l'embout (8).

14. Embout suivant l'une quelconque des revendications 1 à 13, caractérisé par le fait que les lamelles (38) comportent une zone (39) présentant des ondulations pour permettre leur déformation dans la direction longitudinale, sous l'effet de dilatations différentielles des lamelles (38) et de la structure réticulée (14) de l'embout.

## Patentansprüche

1. Filterfußstück für ein Brennstabbündel eines leichtwassergekühlten Kernreaktors, das ein Querelement (12) umfaßt, das Druckkräfte aufnehmen und die Brennstäbe halten soll, und das aus einer gitterförmigen, biegefesten Konstruktion (14, 14') besteht, die außen durch einen Rahmen begrenzt wird, dessen Querschnitt im wesentlichen dem Querschnitt des Brennstabbündels (1) entspricht und miteinander verbundene Wände (15) aufweist, die Zellen (16) begrenzen, welche Durchströmöffnungen für das Kühlwasser des Brennstabbündels bilden, und die eine relativ geringe Dicke gegenüber den Zellen (16) aufweisen, so daß die Oberfläche der Einheit der Zellen (16) gegenüber der Gesamtoberfläche des Fußstückes groß ist, wobei in jeder der Zellen (16, 16') der gitterförmigen Konstruktion (14, 14') eine Vielzahl von Lamellen (18, 28) an ihren Enden direkt und einzeln an den beiden gegenüberliegenden Zellwänden befestigt sind, in der Weise, daß ihre Seiten im wesentlichen parallel zur Kühlwasserumlaufrichtung sind, und daß zwischen ihnen Zwischenräume bestehen, deren Breite geringer als die Größe der Teilchen ist, die von dem Kühlfluid mitgenommen werden und sich in dem Brennstabbündel (1) ablagern könnten.

2. Fußstück nach Anspruch 1, dadurch gekennzeichnet, daß die Enden der Lamellen (18) in Schlitze (21) geführt sind, die in Längsrichtung in die Wände (15) der Zellen (16) der gitterförmigen Konstruktion (14) gearbeitet sind, und innerhalb der Schlitze (21) verlötet sind.

3. Fußstück nach Anspruch 1, dadurch gekennzeichnet, daß die Enden der Lamellen (18) an die Wände (15) der Zellen (16) der gitterförmigen Konstruktion (14) geschweißt sind.

4. Fußstück nach Anspruch 3, dadurch gekennzeichnet, daß die Lamellen (18) an die Wände (15) der Zellen (16) der gitterförmigen Konstruktion (14) punktgeschweißt sind.

5. Fußstück nach Anspruch 3, dadurch gekennzeichnet, daß die Enden der Lamellen (18) mittels Schweißnähten (22) an die Wände (15) der Zellen (16) der gitterförmigen Konstruktion (14) geschweißt sind.

6. Filterfußstück für ein Brennstabbündel eines leichtwassergekühlten Kernreaktors, das ein Querelement (12) umfaßt, das Druckkräfte aufnehmen und die Brennstäbe halten soll, und das aus einer gitterförmigen, biegefesten Konstruktion (14, 14') besteht, die außen durch einen Rahmen begrenzt wird, dessen Querschnitt im wesentlichen dem Querschnitt des Brennstabbündels (1) entspricht und Wände (15) aufweist, die Zellen begrenzen (16), welche Durchströmöffnungen für das Kühlwasser des Brennstabbündels bilden, wobei in jeder der Zellen (16, 16') der gitterförmigen Konstruktion (14, 14') eine Vielzahl von Lamellen (18, 28) an ihren Enden an den Zellenwänden befestigt sind, in der Weise, daß ihre Seiten im wesentlichen parallel zur Kühlwasserumlaufrichtung sind, und daß zwischen ihnen Zwischenräume bestehen, deren Breite geringer als die Größe der Teilchen ist, die von dem Kühlfluid mitgenommen werden und sich in dem Brennstabbündel (1) ablagern könnten, wobei die parallelen Lamellen (28) jeder Einheit in einer Zelle (16') der gitterförmigen Konstruktion (14') angeordnet sind und an ihren Enden mit einem Rahmen (31) verbunden sind, dessen Form der Form der Zelle (16') entspricht, und ein Filtermodulelement (30) bilden, das an die gitterförmige Konstruktion (14) geschweißt oder gelötet werden kann.

7. Fußstück nach Anspruch 6, dadurch gekennzeichnet, daß die Moduleinheiten (30) aus Metallelementen bestehen, die aus einem Blech oder Stahlband geschnitten wurden und durch Schweißen oder Löten miteinander verbunden wurden.

8. Fußstück nach Anspruch 6, dadurch gekennzeichnet, daß die Moduleinheiten (30) aus einem Stück sind und durch Bearbeitung eines aus einem dicken Blech geschnittenen Stücks entstanden sind, und zwar mit Hilfe eines der folgenden Verfahren: Elektroerosion, elektrochemische Bearbeitung, Ausschnitt durch Schleifwasserstrahl.

9. Fußstück nach einem der Ansprüche 6, 7 und 8, dadurch gekennzeichnet, daß die Modulelemente (30) ein Verstärkungselement (35) umfassen, das am Außenrahmen (31) des Modulelements (30) an zwei zu den Lamellen (28) parallelen Seiten des Rahmens (30) befestigt ist und die Lamellen (28) in Querrichtung hält.

10. Fußstück nach einem der Ansprüche 1 bis 9, dadurch gekennzeichnet, daß die Lamellen (18, 28) einen rechtekkigen Querschnitt haben.

11. Fußstück nach einem der Ansprüche 1 bis 9, dadurch gekennzeichnet, daß die Lamellen (18, 28) einen länglichen Querschnitt mit abgerundeten Kanten haben.

12. Fußstück nach einem der Ansprüche 1 bis 9, dadurch gekennzeichnet, daß die Lamellen (18, 28) einen stromlinienförmigen Querschnitt aufweisen, um den hydraulischen Widerstand der Lamellen (18, 28) beim Strömen des Kühlwassers in dem Brennstabbündel zu verringern.

13. Fußstück nach einem der Ansprüche 1 bis 12, dadurch gekennzeichnet, daß die Lamellen (18, 28) aus einem Material mit einem Ausdehnungskoeffizienten bestehen, der nahe dem des Materials liegt, aus dem die gitterförmige Konstruktion (14) des Fußstücks (8) besteht.

14. Fußstück nach einem der Ansprüche 1 bis 13, dadurch gekennzeichnet, daß die Lamellen (38) einen mit Wellungen versehenen Bereich (39) aufweisen, um ihre Verformung in Längsrichtung unter dem Einfluß einer unterschiedlichen Ausdehnung der Lamellen (38) und der gitterförmigen Konstruktion (14) des Fußstücks zuzulassen.

## Claims

1. Lower filtering nozzle for a fuel assembly of a nuclear reactor cooled by light water, comprising a transverse element (12) for absorbing force and retaining the rods of the assembly which consists of a grid structure (14, 14') resistant to bending, delimited on the outside by a frame the section of which is substantially identical to the cross section of the assembly (1) and having walls (15) connected to one another and defining cells (16) which constitute openings for the passage of cooling water for the assembly, and which are relatively thin in relation to the dimensions of the cells (16), so that the surface area of all the cells (16) is considerable in relation to the total surface area of the nozzle, whilst inside each of the cells (16, 16') of the grid structure (14, 14') a plurality of blades (18, 28) parallel to one another are fixed, directly and individually, by their ends, to two opposite walls of the cell, in such a way that their surfaces are substantially parallel to the direction of circulation of the cooling water and so as to define between them spaces which are smaller in width than the size of the particles liable to be carried along by the cooling fluid and become lodged inside the fuel assembly (1).

2. Nozzle according to claim 1, characterised in that the ends of the blades (18) engage in slots (21) machined in the longitudinal direction on the walls (15) of the cells (16) of the grid structure (14) and brazed inside the slots (21).

3. Nozzle according to claim 1, characterised in that the ends of the blades (18) are welded to the walls (15) of the cells (16) of the grid structure (14).

4. Nozzle according to claim 3, characterised in that the blades (18) are spot welded to the walls (15) of the cells (16) of the grid structure (14).

5. Nozzle according to claim 3, characterised in that the ends of the blades (18) are welded, via weld beads (22), to the walls (15) of the cells (16) of the grid structure (14).

6. Lower filtering nozzle for a fuel assembly of a nuclear reactor cooled by light water, comprising a transverse element (12) for absorbing force and retaining the rods of the assembly which consists of a grid structure (14, 14') resistant to bending, delimited on the outside by a frame the section of which is substantially identical to the cross section of the assembly (1) and having walls (15) defining cells (16) which constitute openings for the passage of cooling water for the assembly, whilst inside each of the cells (16, 16') of the grid structure (14, 14') a plurality of blades (18, 28) parallel to one another are fixed to the walls of the cell by their ends, in such a way that their surfaces are substantially parallel to the direction of circulation of the cooling water and so as to define between them spaces which are smaller in width than the size of the particles liable to be carried along by the cooling fluid and become lodged inside the fuel assembly (1), said parallel blades (28) of each of the assemblies being arranged inside a cell (16') of the grid structure (14') and connected to a frame (31), the shape of which corresponds to the shape of a cell (16'), by their ends and constituting a modular filtering element (30) which can be welded or brazed to the grid structure (14).

7. Nozzle according to claim 6, characterised in that the modular assemblies (30) are made up of metal elements cut out from sheet or strip metal and attached to one another by welding or brazing.

8. Nozzle according to claim 6, characterised in that the modular assemblies (30) are constructed in one piece and produced by machining a piece cut out from a thick sheet, by one of the following processes: electro-erosion, electrochemical machining or cutting with abrasive water jets.

9. Nozzle according to any one of claims 6, 7 and 8, characterised in that the modular elements (30) comprise a strengthening element (35) which is fixed to the outer frame (31) of the modular element (30) along two sides of the frame (30) parallel to the blades (28) and which ensures that the blades (28) are held transversely.

10. Nozzle according to any one of claims 1 to 9, characterised in that the blades (18, 28) are rectangular in section.

11. Nozzle according to any one of claims 1 to 9, characterised in that the blades (18, 28) have an elongated cross section with rounded edges.

12. Nozzle according to any one of claims 1 to 9, characterised in that the blades (18, 28) have a profiled cross section, so as to reduce the hydraulic resistance of the blades (18, 28) to the passage of cooling water in the fuel assembly.

13. Nozzle according to any one of claims 1 to 12, characterised in that the blades (18, 28) are made of a material having a coefficient of expansion which is similar to that of the material from which the grid structure (14) of the nozzle (8) is made.

14. Nozzle according to any one of claims 1 to 13, characterised in that the blades (38) have a zone (39) with undulations to allow deformation thereof in the longitudinal direction, under the effect of differential expansions of the blades (38) and of the grid structure (14) of the nozzle.
